# EUROPEAN PATENT APPLICATION

(11) **EP 1 635 275 A1**
(43) Date of publication of application: **15.03.2006**
(21) Application number: 04820354.1
(22) Date of filing: 01.12.2004
(51) Int. Cl.: G06F 19/00

(54) **BAG-MAKING MACHINE**

(30) Priority: 18.05.2004 JP 2004147583
(71) Applicant: Totani Corporation, Kyoto-shi, Kyoto 601-8213 (JP)
(72) Inventor: TOTANI, Mikio c/o Totani Corporation, Kyoto-shi, Kyoto 6018213 (JP)
(74) Representative: Pfenning, Meinig & Partner GbR
(86) International application number: PCT/JP2004/017880
(87) International publication number: WO 2005/110727

(57) **Abstract**

A bag-making machine for manufacturing a plastic bag with a plastic film (1) capable of remarkably increasing a speed, accurately cutting the plastic film to accurately manufacture the plastic bag, and easily coping with a request for a change in the size of the plastic bag when requested. In an upstream side feed route, the plastic film is intermittently fed at specified cycles in increments of a unit feed length of N times the size of the plastic bag, and heat-sealed for each intermittent feeding so that the plastic film in the quantity of N times can be provided. In addition, after the plastic film is heat-sealed, the plastic film (1) is intermittently fed, in a downstream side feed route, at the cycles of N times that of an upstream side feed mechanism in increments of the unit feed length corresponding to the size of the plastic bag, and cut for each intermittent feeding with a cutter (10).

## Description

### Technical Field

The invention relates to an apparatus for successively making plastic bags of plastic film.

### Back Ground

It is common place in the apparatus for successively making plastic bags of plastic film that superposed layers of plastic film are fed intermittently for a length corresponding to the size of plastic bag and at a cycle number. The layers of plastic film are heat sealed by heat seal means whenever being fed intermittently. The layers of plastic film are then cut by a cutter whenever being fed intermittently, to successively make plastic bags. In this case, the apparatus is problematic in the heat seal means. The layers of plastic film have to be heated and pressurized at a certain seal temperature and in a considerable seal time to be heat sealed conveniently. However, the seal temperature mustn't be higher than the fused temperature of plastic film. The seal time can therefore not be shortened so much. In addition, the heat seal means is too heavy to be actuated at high speed. Accordingly, it is difficult from the technical viewpoint to remarkably speed up the apparatus.

In order to overcome the problems, the layers of plastic film should be fed intermittently not for the length corresponding to the size of plastic bag but for a length which is N times as much as the size of plastic bag and at a cycle number. The layers of plastic film are then heat sealed by heat seal means whenever being fed intermittently to obtain N times in number of plastic bags. It should herein be understood that N is an integer equal to or greater than 2. This method is known and disclosed in Japanese Patent Publication No. 48,862 of 1977. In addition, in the apparatus of the publication, the layers of plastic film are fed continuously after being heat sealed. The layers of plastic film are then cut by a cutter to successively make plastic bags. The apparatus is arranged to successively make plastic bags two by two. The cutter is a rotary type.

Accordingly, in the apparatus of the publication, the layers of plastic film can be heat sealed for N times in number of plastic bags at a time by making the heat seal means actuated once and making the layers of plastic film heated and pressurized in the seal time, to be free from the problems of seal time and actuated time of heat seal means. The arrangement can therefore remarkably speed up the apparatus.

However, in the apparatus of the publication, the layers of plastic film have to be cut by the cutter when being fed continuously, resulting in a problem of accuracy of cut position. It is difficult and almost impossible from the technical viewpoint to accurately cut the layers of plastic film at predetermined positions when the layers of plastic film means are fed continuously. The apparatus can therefore not precisely make plastic bags. It must often lead to defective bags. It is also difficult to cope with a change in size of plastic bag when required. In addition, additional means may be incorporated into the apparatus to make notches formed in the plastic bags or make the plastic bags cut at corners. The additional means must be high in cost and difficult in adjustment when being incorporated into the apparatus in which the layers of plastic film are fed continuously.

It is therefore an object of the invention to provide a new and improved apparatus for successively making plastic bags of plastic film, so as to remarkably speed up the apparatus, accurately cut the layers of plastic film to precisely make plastic bags, and cope with a change in size of plastic bag without difficulty.

### Disclosure of the Invention

According to the invention, the apparatus includes upstream feeding means by which superposed layers of plastic film are fed intermittently along an upstream feeding path for a length which is N times as much as the size of plastic bag and at a cycle number. Heat seal means is disposed in the upstream feeding path. The layers of plastic film are heat sealed by the heat seal means whenever being fed intermittently to obtain N times in number of plastic bags. The apparatus further includes downstream feeding means by which the layers of plastic film are fed intermittently along a downstream feeding path for a length corresponding to the size of plastic bag and at a cycle number which is N times as many as the cycle number of the upstream feeding means, after being heat sealed by the heat seal means. A cutter is disposed in the downstream feeding path. The layers of plastic film are cut by the cutter whenever being fed intermittently. The apparatus further includes an accumulator disposed between the upstream and downstream feeding paths. The layers of plastic film are accumulated temporarily by the accumulator whenever being fed intermittently by the upstream feeding means. The layers of plastic film are then supplied from the accumulator whenever being fed intermittently by the downstream feeding means. It should herein be understood that N is an integer equal to or greater than 2.

In a preferred embodiment of the invention, upstream drive means is connected to the upstream feeding means and the heat seal means. Downstream drive means is connected to the downstream feeding means and the cutter. The apparatus further includes control means by which the upstream drive means is controlled so that the upstream feeding means and the heat seal means can be driven and actuated by the upstream drive means to be put into operation monitored by the control means. The downstream drive means is controlled by the control means so that the downstream feeding means and the cutter can be driven and actuated by the downstream drive means. In addition, at least one of the downstream feeding means and the cutter is stopped or actuated especially by the control means when at least one of the upstream feeding means and the heat seal means is subject to an unusualness of operation so that an operator can recognize the unusualness.

In the embodiment, discharge means is disposed downstream of the cutter. The plastic bags are discharged by the discharge means. The downstream drive means is connected to the discharge means and controlled by the control means so that the discharge means can be driven and actuated by the downstream drive means. The discharge means may therefore be stopped or actuated especially by the control means when at least one of the upstream feeding means and the heat seal means is subject to an unusualness of operation so that an operator can recognize the unusualness.

The upstream drive means comprises a main servomotor and other servomotors. The heat seal means is driven and actuated by the main servomotor. The upstream feeding means is driven and actuated by other servomotors. The main servomotor generates a signal of rotation whenever being rotated. The operation is monitored and confirmed by the signal of rotation.

The downstream feeding means is delayed starting by a time less than one cycle time thereof after the upstream feeding means starting.

### Brief Description of Drawings

Fig. 1 is a side view of a preferred embodiment of the invention.
Fig. 2 is a plan view of the layers of plastic film of Fig. 1.

### Best Mode to carry out the Invention

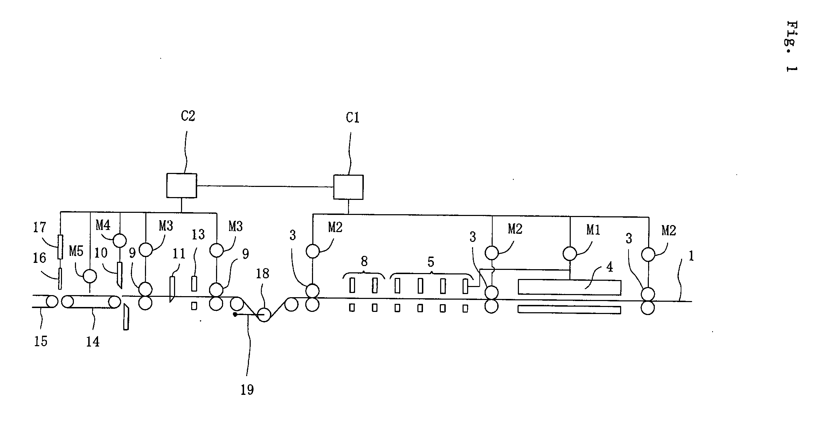

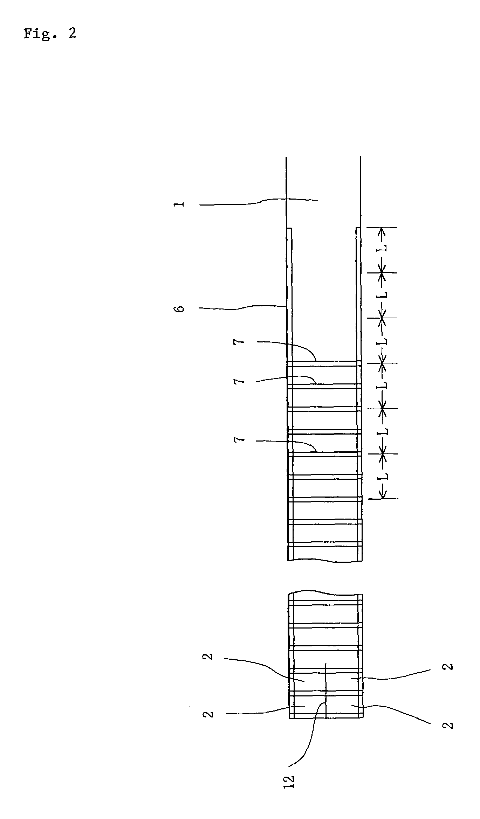

Turning now to the drawings, Fig. 1 illustrates an apparatus utilizing superposed layers of plastic film 1 to successively make plastic bags 2 of plastic film, as shown in Fig. 2, according to the invention.

The apparatus includes upstream feeding means by which the layers of plastic film 1 are fed intermittently along an upstream feeding path. The upstream feeding means comprises upstream feeding rollers 3. In addition, heat seal means is disposed in the upstream feeding path. The layers of plastic film 1 are heat sealed by the heat seal means whenever being fed intermittently. The heat seal means comprises longitudinal seal means 4 and cross seal means 5.

The apparatus further includes upstream drive means connected to the upstream feeding rollers 3, the longitudinal seal means 4 and the cross seal means 5. The apparatus further includes control means by which the upstream drive means is controlled so that the upstream feeding rollers 3, the longitudinal seal means 4 and the cross seal means 5 can be driven and actuated by the upstream drive means. For example, the control means comprises an upstream computer C1. The upstream drive means comprises a main servomotor M1 and other servomotors M2. The main servomotor M1 is connected to the longitudinal seal means 4 and the cross seal means 5. Other servomotors M2 are connected to the upstream feeding rollers 3. The upstream computer C1 is connected to the main servomotor M1 and other servomotors M2. The main servomotor M1 is controlled by the upstream computer C1 so that the longitudinal seal means 4 and the cross seal means 5 can be driven and actuated by the main servomotor M1. Other servomotors M2 are also controlled by the upstream computer C1 so that the upstream feeding rollers 3 can be driven and actuated by other servomotors M2.

Furthermore, in the apparatus, the layers of plastic film 1 are fed intermittently by the upstream feeding rollers 3 along the upstream feeding path for a length which is N times as much as the size of plastic bag 2 and at a cycle number. In addition, the layers of plastic film 1 are heat sealed by the longitudinal seal means 4 and the cross seal means 5 whenever being fed intermittently to obtain N times in number of plastic bags. It should herein be understood that N is an integer equal to or greater than 2. The cycle number means what times the layers of plastic film 1 are fed intermittently per minute.

For example, the layers of plastic film 1 are fed intermittently by the upstream feeding rollers 3 along the upstream feeding path for a length which is two times as much as the size of plastic bag 2 and at a cycle number. The longitudinal seal means 4 has a length which is four times as much as the size of plastic bag 2. The longitudinal seal means 4 is driven and actuated by the main servomotor M1 whenever the layers of plastic film 1 are fed intermittently. The layers of plastic film 1 are therefore heat sealed longitudinally thereof by the longitudinal seal means 4 whenever being fed intermittently so that longitudinal sealed portions 6 can be formed in the layers of plastic film 1. The longitudinal seal means 4 is then driven and actuated again whenever the layers of plastic film 1 are fed intermittently so that the layers of plastic film 1 can be heat sealed longitudinally thereof again. In addition, the cross seal means 5 comprises four seal means spaced from each other at a distance corresponding to the size of plastic bag 2. The cross seal means 5 is driven and actuated by the main servomotor M1 whenever the layers of plastic film 1 are fed intermittently. The layers of plastic film 1 are therefore heat sealed crossly thereof by the cross seal means 5 whenever being fed intermittently so that cross sealed portions 7 can be formed in the layers of plastic film 1. The cross seal means 5 is then driven and actuated again whenever the layers of plastic film 1 are fed intermittently so that the layers of plastic film 1 can be heat sealed crossly thereof again. It should therefore be noted that the layers of plastic film 1 are heat sealed longitudinally thereof twice and heat sealed crossly thereof twice so that the longitudinal sealed portions 6 and the cross sealed portions 7 can be formed in the layers of plastic film 1.

Accordingly, in the apparatus, the layers of plastic film 1 are heat sealed by the heat seal means whenever being fed intermittently to obtain two times in number of plastic bags 2. In addition, two cooling means 8 are spaced from each other at a distance corresponding to the size of plastic bag 2. The cooling means 8 are driven and actuated by the main servomotor M1 so that the cross sealed portions 7 can be cooled by the cooling means 8 whenever the layers of plastic film 1 are fed intermittently and after the layers of plastic film 1 are heat sealed crossly thereof.

The apparatus further includes downstream feeding means by which the layers of plastic film 1 are fed intermittently along a downstream feeding path after being heat sealed by the heat seal means and cooled by the cooling means. The downstream feeding means comprises downstream feeding rollers 9. In addition, a cutter 10 is disposed in the downstream feeding path. The layers of plastic film 1 are cut by the cutter 10 whenever being fed intermittently.

The apparatus further includes downstream drive means connected to the downstream feeding rollers 9 and the cutter 10. The downstream drive means is controlled by the control means so that the downstream feeding rollers 9 and the cutter 10 can be driven and actuated by the downstream drive means. For example, the control means further comprises a downstream computer C2 besides the upstream computer C1. The downstream drive means comprises downstream servomotors M3 and M4. The downstream servomotors M3 are connected to the downstream feeding rollers 9. The downstream servomotor M4 is connected to the cutter 10. The downstream computer C2 is connected to the upstream computer C1 and the downstream servomotors M3 and M4. The downstream servomotors M3 are controlled by the downstream computer C2 so that the downstream feeding rollers 9 can be driven and actuated by the downstream servomotors M3. The downstream servomotor M4 is also controlled by the downstream computer C2 so that the cutter 10 can be driven and actuated by the downstream servomotor M4.

Furthermore, in the apparatus, the layers of plastic film 1 are fed intermittently by the downstream feeding rollers 9 along the downstream feeding path for a length corresponding to the size of plastic bag 2 and at a cycle number which is N times as many as the cycle number of the upstream feeding rollers 3. For example, the layers of plastic film 1 are fed intermittently by the upstream feeding rollers 3 along the upstream feeding path for the length which is two times as much as the size of plastic bag 2 and at the cycle number, as described earlier. In this connection, the layers of plastic film 1 are fed intermittently by the downstream feeding rollers 9 along the downstream feeding path for a length corresponding to the size of plastic bag 2 and at a cycle number which is two times as many as the cycle number of the upstream feeding rollers 3. In addition, the layers of plastic film 1 are cut by the cutter 10 whenever being fed intermittently.

The apparatus can therefore successively make the plastic bags 2 of plastic film.

The apparatus further includes a slitter 11 disposed in the downstream feeding path. The layers of plastic film 1 are slit by the slitter 11 along a slit line 12. The layers of plastic film 1 are then cut by the cutter 10 to successively make plastic bags 2 two by two. In addition, punch means 13 may be disposed in the downstream feeding path. The layers of plastic film 1 are punched out by the punch means 13 whenever being fed intermittently so that the plastic bags 2 can be cut at corners. The punch means 13 is called corner cut means. The apparatus may utilize punch means disposed in the downstream feeding path as notch means to make the layers of plastic film 1 punched out so that notches can be formed in the plastic bags 2.

The apparatus further includes discharge means disposed downstream of the cutter 10. The plastic bags 2 are discharged by the discharge means. In this connection, the downstream drive means is connected to the discharge means. The downstream drive means is controlled by the control means so that the discharge means can be driven and actuated by the downstream drive means. In the embodiment, the discharge means comprises conveyors 14 and 15 separated from each other. In addition, a stop 16 is disposed above and between the conveyors 14 and 15. The downstream drive means further comprises a downstream drive motor M5 and a cylinder 17. The downstream drive motor M5 is connected to the conveyors 14 and 15. The cylinder 17 is connected to the stop 16. Furthermore, the downstream computer C2 is connected to the downstream drive motor M5 and the cylinder 17. The downstream drive motor M5 is controlled by the downstream computer C2 so that the conveyors 14 and 15 can be driven and actuated by the downstream drive motor M5. The plastic bags 2 are therefore discharged by the conveyors 14 and 15. The cylinder 17 is controlled by the downstream computer C2 so that the stop 16 can be lowered between the conveyors 14 and 15 when defective bags come into being. The defective bags are therefore engaged with the stop 16 to be dropped between the conveyors 14 and 15.

The apparatus further includes an accumulator disposed between the upstream and downstream feeding paths. The accumulator comprises a dancer roller 18 supported by an arm 19 and engaged with the layers of plastic film 1. The dancer roller 18 swings downward along with the arm 19 so that the layers of plastic film 1 can be accumulated temporarily by the dancer roller 18 whenever being fed intermittently by the upstream feeding rollers 3. The dancer roller 18 then swings upward along with the arm 19 so that the layers of plastic film 1 can be supplied from the dancer roller 18 whenever being fed intermittently by the downstream feeding rollers 9.

As to the accumulated and supplied quantities of plastic film 1 accumulated by and supplied from the dancer roller 18, the layers of plastic film 1 are fed intermittently by the upstream feeding rollers 3 along the upstream feeding path for the length which is N times as much as the size of plastic bag 2, as described earlier. In contrast, the layers of plastic film 1 are fed intermittently by the downstream feeding rollers 9 along the downstream feeding path for the length corresponding to the size of plastic bag 2 and at the cycle number which is N times as many as the cycle number of the upstream feeding rollers 3, as also described earlier. Accordingly, the upstream and downstream fed lengths in total are kept equal to each other with respect to the layers of plastic film 1 fed intermittently along the upstream and downstream feeding paths. The accumulated and supplied quantities in total are therefore kept equal to each other with respect to the layers of plastic film 1 accumulated by and supplied from the dancer roller 18, without resulting in excess and deficiency.

Accordingly, in the apparatus, the layers of plastic film 1 can be heat sealed for N times in number of plastic bags 2 at a time by making the heat seal means 4 and 5 actuated once and making the layers of plastic film 1 heated and pressurized in a considerable seal time. For example, the layers of plastic film 1 can be heat sealed for two times in number of plastic bags 2 at a time, to be free from the problems of seal time and actuated time of heat seal means 4 and 5. The arrangement can therefore remarkably speed up the apparatus.

Furthermore, unlike the apparatus of Japanese Patent Publication No. 48,862 of 1977, it is not required to make the layers of plastic film fed continuously after being heat sealed and make the layers of plastic film cut by a cutter when being fed continuously. The layers of plastic film 1 are fed intermittently by the downstream feeding rollers 9 along the downstream feeding path after being heat sealed, as described earlier. The layers of plastic film 1 are then cut by the cutter 10 whenever being fed intermittently, as also described earlier. Accordingly, it is practicable to accurately cut the layers of plastic film 1 at predetermined positions. The apparatus can therefore precisely make plastic bags 2, with no factor leading to defective bags.

In the apparatus, the cross seal means 5 comprises four seal means which are moved for adjustment of space therebetween when taking a change in size of plastic bag 2. The upstream drive means and the upstream feeding rollers 3 are controlled by the control means so that the layers of plastic film 1 can be fed intermittently by the upstream feeding rollers 3 for a length which is adjusted and predetermined into N times as much as the size of plastic bag 2 changed. The downstream drive means and the downstream feeding rollers 9 are controlled by the control means so that the layers of plastic film 1 can be fed intermittently by the downstream feeding rollers 9 for a length which is adjusted and predetermined to correspond to the size of plastic bag 2 changed. The apparatus can therefore cope with the change in size of plastic bag 2 without difficulty, when required.

By the way, the apparatus may accidentally and successively make defective bags of plastic film if at least one of the upstream feeding rollers 3 and the heat seal means 4 and 5 is subject to an unusualness of operation. Under the circumstances, the main servomotor M1 and other servomotors M2 are controlled by the upstream computer C1 so that the upstream feeding rollers 3 and the heat seal means 4 and 5 can be driven and actuated by the main servomotor M1 and other servomotors M2 to be put into operation monitored and confirmed by the upstream computer C1. The upstream computer C1 generates a signal of confirmation. The downstream servomotors M3 and M4 and the downstream drive motor M5 are controlled by the downstream computer C2 in response to the signal of confirmation from the upstream computer C1 so that the downstream feeding rollers 9, the cutter 10 and the conveyors 14 and 15 can be driven and actuated by the downstream servomotors M3 and M4 and the downstream drive motor M5. In addition, the upstream computer C1 generates a signal of unusualness when at least one of the upstream feeding rollers 3 and the heat seal means 4 and 5 is subject to an unusualness of operation. The cutter 10 is then stopped by the downstream computer C2 and the downstream servomotor M4 in response to the signal of unusualness from the upstream computer C1. The layers of plastic film 1 are therefore not cut by the cutter 10 whenever being fed intermittently to be kept continuous and discharged as it is. An operator can therefore recognize the unusualness. The operator then stops the apparatus to successively make defective bags no more.

Furthermore, the main servomotor M1 generates a signal of rotation whenever being rotated. The operation is monitored and confirmed by the signal of rotation. The operation can therefore be monitored and confirmed without difficulty. In addition, the downstream feeding rollers 9 are delayed starting by a time less than one cycle time thereof after the upstream feeding rollers 3 starting. The layers of plastic film 1 are then fed intermittently by the downstream feeding rollers 9 and cut by the cutter 10 whenever being fed intermittently. The cutter 10 can therefore be stopped immediately when the apparatus is subject to an unusualness of operation.

The downstream feeding rollers 9 may be stopped by the downstream computer C2 and the downstream servomotors M3 when at least one of the upstream feeding rollers 3 and the heat seal means 4 and 5 is subject to an unusualness of operation. The cutter 10 or the downstream feeding rollers 9 may be actuated especially by the downstream computer C2. Any such the arrangements can make an operator recognize the unusualness.

The conveyors 14 and 15 may be stopped by the downstream computer C2 and the downstream drive motor M5 when at least one of the upstream feeding rollers 3 and the heat seal means 4 and 5 is subject to an unusualness of operation so that an operator can recognize the unusualness. The stop 16 may be lowered by the downstream computer C2 and the cylinder 17 to make the plastic bags 2 dropped so that an operator can recognize the unusualness.

The control means may comprise not the upstream and downstream computers C1 and C2 but a single computer. In this case, the main servomotor M1 and other servomotors M2 are controlled by the single computer so that the upstream feeding rollers 3 and the heat seal means 4 and 5 can be driven and actuated by the main servomotor M1 and other servomotors M2 to be put into operation monitored and confirmed by the single computer. The downstream servomotors M3 and M4, the downstream drive motor M5 and the cylinder 17 are also controlled by the single computer so that the downstream feeding rollers 9, the cutter 10, the conveyors 14 and 15 and the stop 16 can be driven and actuated by the downstream servomotors M3 and M4, the downstream drive motor M5 and the cylinder 17. In addition, at least one of the downstream feeding rollers 9 and the cutter 10 is stopped or actuated especially by the single computer when at least one of the upstream feeding rollers 3 and the heat seal means 4 and 5 is subject to an unusualness of operation. The conveyors 14 and 15 or the stop 16 may be stopped or actuated especially by the single computer.

The apparatus may include not only the longitudinal seal means 4 and the cross seal means 5 but also additional means disposed in the upstream feeding path. The upstream drive means is connected to the additional means so that the additional means can be driven and actuated by the upstream drive means. The layers of plastic film 1 are therefore processed by the additional means. For example, the additional means comprises punch means by which the layers of plastic film 1 are punched out. In this case, the additional means is driven and actuated by the upstream drive means to be put into operation monitored by the control means. In addition, the downstream feeding rollers 9, the cutter 10, the conveyors 14 and 15 or the stop 16 is stopped or actuated especially by the control means when the additional means is subject to an unusualness of operation.

The apparatus may be modified in design variously. For example, the layers of plastic film 1 may be fed intermittently by upstream feeding means along an upstream feeding path for a length which is three times as much as the size of plastic bag. The layers of plastic film 1 are heat sealed by heat seal means whenever being fed intermittently to obtain three times in number of plastic bags. The layers of plastic film 1 are then fed intermittently by downstream feeding means along a downstream feeding path for a length corresponding to the size of plastic bag and at a cycle number which is three times as many as the cycle number of the upstream feeding means, after being heat sealed by the heat seal mean. The layers of plastic film 1 are cut by a cutter whenever being fed intermittently. In the apparatus, the layers of plastic film 1 can be heat sealed for three times in number of plastic bags at a time.

In an apparatus in which the layers of plastic film are heat sealed by special seal means and then heat sealed by general seal means, the layers of plastic film may be fed intermittently by upstream feeding means along a upstream feeding path for a length which is three times as much as the size of plastic bag. The special seal means is disposed in the upstream feeding path. The layers of plastic film are heat sealed by the special seal means whenever being fed intermittently. The layers of plastic film are then fed intermittently by intermediate feeding means along an intermediate feeding path for a length which is two times as much as the size of plastic bag and at a cycle number which is three-seconds times as many as the cycle number of the upstream feeding means. The general seal means is disposed in the intermediate feeding path. The layers of plastic film are heat sealed by the general seal means whenever being fed intermittently. The layers of plastic film are then fed intermittently by downstream feeding means along a downstream feeding path for a length corresponding to the size of plastic bag and at a cycle number which is three times as many as the cycle number of the upstream feeding means. The layers of plastic film are cut by a cutter whenever being fed intermittently. Furthermore, an accumulator is disposed between the upstream and intermediate feeding paths so that the layers of plastic film can be accumulated by and supplied from the accumulator. An accumulator is disposed between the intermediate and downstream feeding paths so that the layers of plastic film can be accumulated by and supplied from the accumulator.

## Claims

1. An apparatus for successively making plastic bags of plastic film, each of the plastic bags having a size, the apparatus comprising:
upstream feeding means by which superposed layers of plastic film are fed intermittently along an upstream feeding path for a length which is N times as much as the size of plastic bag and at a cycle number;
heat seal means disposed in the upstream feeding path, the layers of plastic film being heat sealed by the heat seal means whenever being fed intermittently to obtain N times in number of plastic bags;
downstream feeding means by which the layers of plastic film are fed intermittently along a downstream feeding path for a length corresponding to the size of plastic bag and at a cycle number which is N times as many as the cycle number of the upstream feeding means, after being heat sealed by the heat seal means;
a cutter disposed in the downstream feeding path, the layers of plastic film being cut by the cutter whenever being fed intermittently; and
an accumulator disposed between the upstream and downstream feeding paths, the layers of plastic film being accumulated temporarily by the accumulator whenever being fed intermittently by the upstream feeding means, the layers of plastic film being then supplied from the accumulator whenever being fed intermittently by the downstream feeding means,
wherein N is an integer equal to or greater than 2.

2. The apparatus as set forth in claim 1 further comprising upstream drive means connected to the upstream feeding means and the heat seal means, downstream drive means connected to the downstream feeding means and the cutter, and control means by which the upstream drive means is controlled so that the upstream feeding means and the heat seal means can be driven and actuated by the upstream drive means to be put into operation monitored by the control means, the downstream drive means being controlled by the control means so that the downstream feeding means and the cutter can be driven and actuated by the downstream drive means, at least one of the downstream feeding means and the cutter being stopped or actuated especially by the control means when at least one of the upstream feeding means and the heat seal means is subject to an unusualness of operation so that an operator can recognize the unusualness.

3. The apparatus as set forth in claim 1 further comprising discharge means disposed downstream of the cutter, the plastic bags being discharged by the discharge means, upstream drive means connected to the upstream feeding means and the heat seal means, downstream drive means connected to the downstream feeding means, the cutter and the discharge means, and control means by which the upstream drive means is controlled so that the upstream feeding means and the heat seal means can be driven and actuated by the upstream drive means to be put into operation monitored by the control means, the downstream drive means being controlled by the control means so that the downstream feeding means, the cutter and the discharge means can be driven and actuated by the downstream drive means, the discharge means being stopped or actuated especially by the control means when at least one of the upstream feeding means and the heat seal means is subject to an unusualness of operation so that an operator can recognize the unusualness.

4. The apparatus as set forth in claim 2 or 3 wherein the upstream drive means comprises a main servomotor and other servomotors, the heat seal means being driven and actuated by the main servomotor, the upstream feeding means being driven and actuated by other servomotors, the main servomotor generating a signal of rotation whenever being rotated, the operation being monitored and confirmed by the signal of rotation.

5. The apparatus as set forth in claim 2 or 3 wherein the downstream feeding means is delayed starting by a time less than one cycle time thereof after the upstream feeding means starting.
